(19) Europäisches Patentamt / European Patent Office / Office européen des brevets

(11) **EP 2 263 818 B1**

(12) **FASCICULE DE BREVET EUROPEEN**

(45) Date de publication et mention
de la délivrance du brevet:
**27.09.2017 Bulletin 2017/39**

(51) Int Cl.:
**B23C 3/00** *(2006.01)* **B23C 5/10** *(2006.01)*

(21) Numéro de dépôt: **10166512.3**

(22) Date de dépôt: **18.06.2010**

(54) **Méthode de fraisage à grande vitesse**

Hochgeschwindigkeitsfräsverfahren

High-speed milling method

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **18.06.2009 FR 0902966**

(43) Date de publication de la demande:
**22.12.2010 Bulletin 2010/51**

(73) Titulaire: **ELPS**
**46100 Figeac (FR)**

(72) Inventeur: **Greffioz, André**
**46100, Capdenac (FR)**

(74) Mandataire: **Gendron, Vincent Christian**
**Fédit-Loriot**
**38, avenue Hoche**
**75008 Paris (FR)**

(56) Documents cités:
**EP-A- 1 153 685    EP-A- 2 030 711
JP-A- 9 300 119     JP-A- 2004 034 171**

• ZHONGQUN L ET AL: "Solution and Analysis of Chatter Stability for End Milling in the Time-domain" CHINESE JOURNAL OF AERONAUTICS,, vol. 21, no. 2, 1 avril 2008 (2008-04-01), pages 169-178, XP022937506 ISSN: 1000-9361 [extrait le 2008-04-01]
• ZATARAIN ET AL: "Analysis of the Influence of Mill Helix Angle on Chatter Stability" CIRP ANNALS, ELSEVIER BV, NL, CH, FR, vol. 55, no. 1, 1 janvier 2006 (2006-01-01), pages 365-368, XP022135467 ISSN: 0007-8506
• PATEL ET AL: "Uncharted islands of chatter instability in milling" INTERNATIONAL JOURNAL OF MACHINE TOOL DESIGN AND RESEARCH, PERGAMON PRESS, OXFORD, GB, vol. 48, no. 1, 19 octobre 2007 (2007-10-19), pages 124-134, XP022306665 ISSN: 0020-7357
• GOVEKAR ET AL: "On Stability and Dynamics of Milling at Small Radial Immersion" CIRP ANNALS, ELSEVIER BV, NL, CH, FR, vol. 54, no. 1, 1 janvier 2005 (2005-01-01), pages 357-362, XP022122590 ISSN: 0007-8506

EP 2 263 818 B1

## Description

La présente invention propose une méthode de fraisage à grande vitesse d'un matériau solide. Des méthodes connues consistent à utiliser des outils de coupe de grand diamètre pour ébaucher le fraisage des matériaux solides à de faibles vitesses de rotation. Aussi, les broches utilisées pour recevoir l'outil de fraisage doivent être de forte puissance à basse vitesse. En revanche, il est nécessaire ensuite de mettre en oeuvre des outils de finition de diamètre inférieur et comme elles sont limitées en vitesse de rotation ce qui pénalise les opérations de finition.

D'autres méthodes, dite « de fraisage à grande vitesse » permette de réaliser l'ébauche et la finition de la pièce fraisée, avec le même outil en augmentant simplement la vitesse de coupe. Ces méthodes présentent l'avantage d'être plus productives. Toutefois, l'accroissement de la vitesse de rotation des outils et la réduction de leur diamètre, donc de la rigidité de l'outil, augmente le niveau vibratoire durant le fraisage obligeant les utilisateurs à réduire la profondeur de passe afin d'éviter les risques de broutement. En conséquence, la durée de vie des broches et des outils, en est d'autant diminuée. Le document de ZHONGQUN L ET AL: "Solution and Analysis of Chatter Stability for End Milling in the Time-domain" (CHINESE JOURNAL OF AERONAUTICS, vol. 21, no. 2, 1 avril 2008, pages 169-178,ISSN: 1000-9361) divulgue une méthode de fraisage à grande vitesse comprenant les caractéristiques du préambule de la revendication 1. Pour atténuer ces inconvénients, il a été imaginé de prendre en compte la fréquence de résonance principale de l'outil sur la broche en fonctionnement, et d'appliquer une méthode dite « technique des lobes de stabilité » qui permet d'adapter la vitesse de rotation de l'outil en fonction de ladite fréquence pour augmenter la stabilité en coupe et ainsi accroître la profondeur de travail, ou profondeur de passe. L'optimisation de cette méthode conduit cependant à conserver de faibles profondeurs de travail. Bien que la productivité soit alors augmentée, car on évite les risques de broutement, l'usinage en faible profondeur réduit la durée de vie des arêtes de coupe. En effet, leur usure est concentrée sur une faible partie utile de l'outil et au surplus, les vibrations engendrées par l'usinage sont néanmoins un inconvénient pour la durée de vie globale des broches et des outils.

Aussi, un problème qui se pose et que vise à résoudre la présente invention est de fournir une méthode de fraisage à grande vitesse qui permette non seulement d'augmenter la durée de vie des outils et des broches, mais aussi d'augmenter la productivité du fraisage.

Dans le but de résoudre ce problème, la présente invention propose, selon un premier aspect, une méthode de fraisage à grande vitesse d'un matériau solide du type selon laquelle : on fournit un outil de coupe présentant une extrémité de fixation et une extrémité de travail opposée, ladite extrémité de travail étant terminée par une extrémité libre, ladite extrémité de travail présentant un nombre de dents hélicoïdales déterminé $Z \geq 1$, lesdites dents étant réparties autour de l'axe de symétrie dudit outil en formant respectivement $Z$ arêtes de coupe, lesdites arêtes de coupe s'étendant respectivement en hélice circulaire autour dudit axe de symétrie dudit outil selon un pas d'hélice déterminé $P$, de ladite extrémité libre vers ladite extrémité de fixation; ensuite on entraîne en rotation ledit outil à une fréquence de rotation $\omega$, ledit outil présentant une fréquence propre $F$ de vibration en flexion; on choisit alors une fréquence de rotation $\omega_f$ sensiblement égale à ladite fréquence propre $F$ dudit outil divisée par $n$ fois le nombre de dents $Z$ dudit outil, $n$ étant un entier naturel; et, on engage à travers ledit matériau solide une longueur d'extrémité de travail dudit outil de coupe correspondant à une profondeur de fraisage; selon l'invention, on choisit une profondeur de fraisage $ap$ égale à $p$ fois ledit pas d'hélice déterminé $P$ divisé par ledit nombre de dents $Z$, $p$ étant un entier naturel supérieur ou égal à 1.

Ainsi, une caractéristique de l'invention réside dans la mise en oeuvre de la technique des lobes de stabilité en prenant en compte la géométrie des outils, et plus précisément le pas par dent qui est le rapport du pas d'hélice sur le nombre de dents, soit la profondeur nominale PN, ou encore la distance qui sépare axialement deux arêtes de coupe consécutives lorsque le nombre de dents $Z$ est supérieur à 1, pour déterminer précisément la profondeur $ap$ de coupe ou la profondeur de passe durant le fraisage. Le pas d'hélice ici considéré, est la distance axiale qui sépare deux spires contigües d'une même hélice ou, la distance axiale qui sépare deux points de l'hélice après un tour d'hélice. Lorsque l'outil présente une seule dent, et partant une seule arête de coupe, la profondeur nominale PN correspond au pas de l'unique hélice circulaire. Par conséquent, l'extrémité de travail présente une longueur suffisante pour que les arêtes de coupe puissent se superposer axialement. Grâce à cette caractéristique, et ainsi qu'on l'expliquera ci-après plus en détail, lorsqu'une arête de coupe, durant une rotation de l'outil, quitte le matériau solide, une seconde arête de coupe doit nécessairement commencer à entailler le matériau, afin que l'effort de coupe demeure sensiblement constant. Ce n'est pas le cas lorsque la profondeur de passe est faible. Ainsi, selon la méthode de fraisage conforme à l'invention, les vibrations engendrées par l'usinage s'atténuent jusqu'à disparaître.

La profondeur nominale PN, c'est-à-dire la profondeur correspondant à la distance qui sépare axialement deux hélices consécutives lorsque l'outil présente au moins deux dents, ou simplement le pas de l'unique hélice circulaire lorsque l'outil présente une seule dent, est donc ici la profondeur servant de base au calcul précité de la profondeur de fraisage $ap$. Cette profondeur de travail $ap$, lorsque $p$ vaut 1, est la profondeur minimale à laquelle l'outil de coupe peut travailler sans générer de vibration. Toutefois, lorsque $p$ est par exemple égal à 2, non seulement l'outil de coupe ne génère pas de vibration supplémentaire, mais au surplus la profondeur de travail est augmentée ce qui, conséquemment, améliore la productivité de l'usinage et la longévité de l'outil.

Selon un mode de mise en oeuvre de l'invention particulièrement avantageux, on entraîne ledit outil de coupe à travers ledit matériau solide selon une direction sensiblement perpendiculaire audit axe de symétrie dudit outil de façon que la section de fraisage, qui est égale à la profondeur de fraisage multipliée par la largeur de fraisage, soit sensiblement égale au produit du diamètre de ladite extrémité de travail et dudit pas d'hélice déterminé P divisé par ledit nombre de dents Z.

La section de fraisage correspond au produit de la profondeur de travail et de la largeur de travail qui elle, ne peut excéder le diamètre de l'outil. Aussi, selon une variante de réalisation, lorsque l'outil de coupe est entraîné en translation à travers le matériau solide, par exemple dans une bordure dont la largeur correspond au diamètre de l'extrémité de travail, on choisit une profondeur de fraisage sensiblement égale audit pas d'hélice déterminé P divisé par ledit nombre de dents Z. Une telle manière de procéder est dite « pleine fraise » ou « rainurage ».

Selon une autre variante de réalisation, lorsque l'outil de coupe est entraîné en translation à travers le matériau solide, dans une bordure dont la largeur correspond simplement au diamètre de l'extrémité de travail divisé par 2 ou plus, on peut choisir alors une profondeur de fraisage correspondant sensiblement au double dudit pas d'hélice déterminé P divisé par ledit nombre de dents Z.

Par conséquent, selon les deux variantes précitées, et à vitesse constante d'entraînement de l'outil de coupe à travers le matériau solide, la quantité de matériau fraisé est sensiblement équivalente.

Avantageusement, on fournit un outil de coupe dont les hélices circulaires desdites arêtes de ladite extrémité de travail présentent un angle $\alpha$ par rapport à l'axe dudit outil selon lequel, tangente $\alpha$ est égal à la circonférence de ladite extrémité de travail divisée par ledit pas d'hélice déterminé P ou bien par le produit de la profondeur nominale de fraisage PN et du nombre de dents Z, ce qui est la même chose. On choisit avantageusement un angle $\alpha$ compris entre 40° et 65°, par exemple 46,3°.

Par ailleurs, on fournit avantageusement un outil de coupe dont l'extrémité de travail présente Z dents hélicoïdales réparties sensiblement régulièrement autour dudit axe de symétrie, par exemple avec un décalage angulaire de +/- 1° ou +/- $2\pi/360$ rad. Par exemple, Z dents espacées les unes des autres de $2\pi/Z$ +/- $2\pi/360$ rad. Le risque de broutement est alors encore atténué. Dans ce cas, on ajuste alors la profondeur de fraisage ap ou bien on forme les outils en modifiant sensiblement le pas des hélices en fonction de l'espacement des dents.

Avantageusement, on fournit un outil de coupe dont ladite extrémité de travail présente un nombre de dents hélicoïdales $Z \geq 9$. De la sorte, la fréquence de passage des dents est accrue sans modification de la fréquence de rotation $\omega$ de l'outil de coupe. Ainsi, par exemple, pour un outil présentant une fréquence propre F de vibration voisine de 800 Hz, et tournant à une vitesse de 24 000 tr/min, la fréquence de passage de dents est alors de 3600 Hz pour un outil comportant neuf dents. Cette fréquence de passage de dents est de 4800 Hz si l'outil comporte 12 dents. On observera que la vitesse de 24 000 tr/min correspond sensiblement à la moitié de la vitesse critique, vitesse qui coïncide avec la fréquence propre et à laquelle la broche explose.

Ainsi, le rapport de cette fréquence de passage de dents sur la fréquence propre F, est suffisamment éloigné de 1 pour éviter les excitations et ainsi les vibrations en broutement alors que la fréquence de rotation de l'outil est suffisamment basse pour éviter l'éclatement à cause de la vitesse critique.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1A est une vue schématique en élévation de face d'un outil de coupe mis en oeuvre selon une méthode conforme à l'invention;
- la Figure 1B est une schématique de dessus selon la flèche 1B de l'outil représenté sur la Figure 1A
- la Figure 2 est une vue schématique de dessous selon la flèche II de l'outil tel qu'illustré sur la Figure 1;
- la Figure 3 est un diagramme des lobes de stabilité d'un premier outil mis en oeuvre selon la méthode conforme à l'invention;
- la Figure 4 est un diagramme des lobes de stabilité d'un deuxième outil;
- la Figure 5 est un premier diagramme montrant l'amplitude de vibration d'un premier outil particulier en fonction de deux autres paramètres ; et,
- la Figure 6 est un second diagramme montrant l'amplitude de vibration d'un second outil particulier en fonction desdits deux autres paramètres ;
- la Figure 7 est une vue schématique de dessous d'un autre outil.

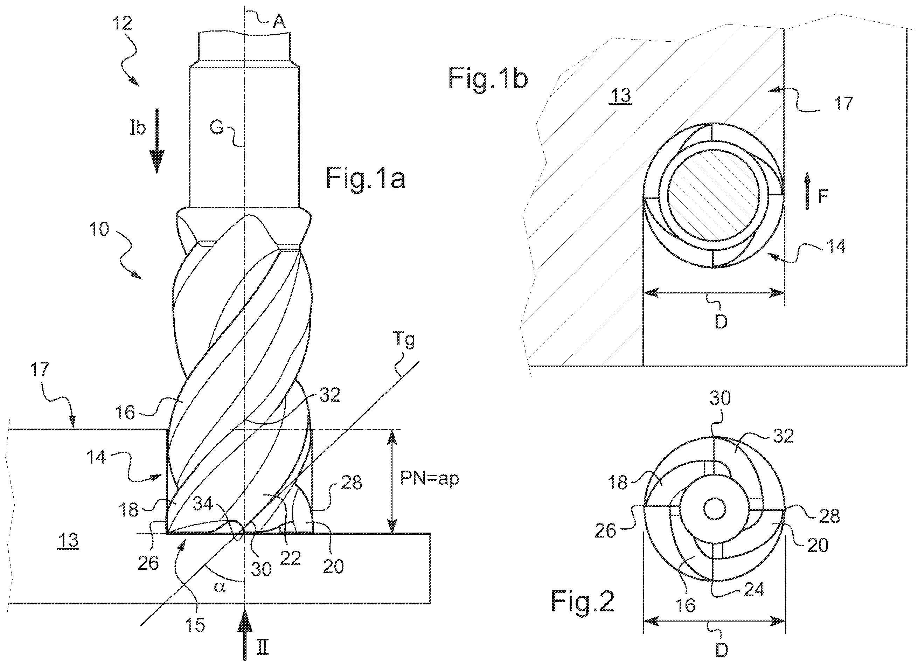

La Figure 1 illustre un outil de coupe 10 d'axe de symétrie A présentant une extrémité de fixation 12 destinée à venir en prise dans une broche non représentée, et à l'opposé une extrémité de travail 14 d'un diamètre D destinée à être engagée dans une pièce 13 d'un matériau solide présentant une face d'approche 17 de manière à pouvoir fraiser la pièce 13. L'extrémité de travail 14 présente ici, outre une extrémité libre 15, quatre dents hélicoïdales 16, 18, 20 et 22 que l'on retrouve plus clairement illustrées sur la Figure 2. Ces dents hélicoïdales 16, 18, 20 et 22 définissent respectivement quatre arêtes de coupe, 24, 26, 28 et 30. Ces arêtes de coupe 24, 26, 28 et 30 s'étendent respectivement en hélice circulaire droite autour dudit axe de symétrie A.

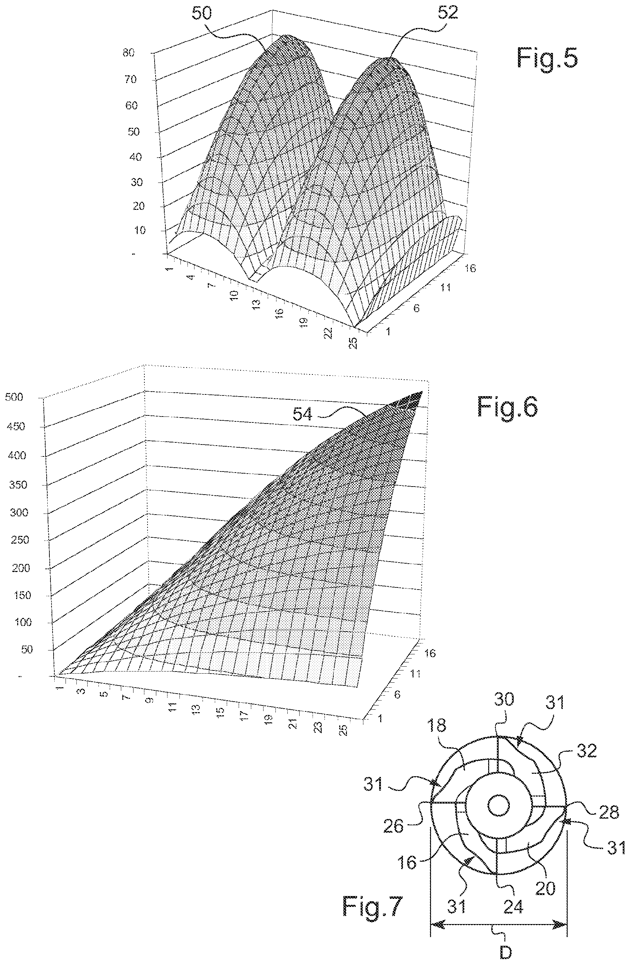

Selon un mode particulier de mise en oeuvre, tel qu'illustré sur la Figure 7, où l'on retrouve l'outil en vue de dessous, les dents hélicoïdales 16, 18, 20 et 22 présentent chacune une lèvre 31 située en arrière de l'arrête de coupe 24, 26, 28 et 30. Cette lèvre 31 formant talon, est usinée radialement et hélicoïdalement pour réduire sa portée radiale par rapport à l'arrête de coupe 24, 26, 28 et 30. De la sorte, la surface de contact entre l'outil et le matériau solide est réduite, ce qui a pour conséquence de réduire également les forces de frottement et donc les vibrations.

Les quatre hélices circulaires droites s'inscrivent ainsi dans une surface cylindrique de révolution autour de l'axe de symétrie A. On observera que les arêtes de coupe 24, 26, 28 et 30 ne s'étendent pas sur 360°, aussi leur pas n'apparaît pas directement. On a également représenté sur la Figure 1 une génératrice du cylindre de révolution précité et une tangente Tg à l'hélice circulaire droite définie par l'une des arêtes de coupe 30 coupant ladite génératrice. L'angle alors formé par cette tangente Tg et la génératrice G forme ainsi l'angle d'hélice $\alpha$ voisin de 45°. En outre, la longueur d'extrémité de travail, que l'on choisira comme partie active de l'outil de coupe pour pénétrer dans le matériau solide et qui s'étend depuis l'extrémité libre 15, vers l'extrémité de fixation 12 est équivalente à la profondeur nominale PN ou profondeur de travail ap. Cette profondeur de travail ap, ou profondeur de fraisage, est au moins égale à la distance qui sépare axialement deux arêtes de coupe consécutives, illustrées par exemple sur la Figure 1 entre les deux points 32 et 34 des deux arêtes successives 26, 30 que vient couper la génératrice G. Ainsi, on observera, que l'angle d'hélice $\alpha$, le diamètre D de l'extrémité de travail 14, la profondeur nominale PN et le nombre de dents Z de l'outil, vérifie la loi:

$$tg\,\alpha = \frac{\pi \cdot D}{PN \cdot Z}$$

Un avantage de la géométrie de l'outil de coupe 10 dont les caractéristiques sont liées par la loi ci-dessus, réside dans la suppression des forces de coupe alternatives, précisément lorsque l'extrémité de travail 14 est engagée, par exemple dans la pièce 13 du matériau solide, avec une profondeur de passe équivalente à p fois la distance qui sépare axialement deux arêtes de coupe consécutives, p étant un entier naturel non nul et une largeur de fraisage correspondant au diamètre D de l'extrémité de travail 14 divisée par p. Plus concrètement, l'outil est de préférence orientée sensiblement perpendiculairement à la face d'approche 17 et il est entraîné en translation, perpendiculairement à son axe de symétrie, dans la pièce 13 du matériau solide, parallèlement à sa face d'approche 17 selon la flèche F illustrée sur la Figure 2. Il importe alors que lorsque l'une des arêtes de coupe 24, 26, 28 ou 30 quitte le matériau, et par conséquent que les efforts de résistance de ce dernier sur la dent correspondante cessent, que de nouveaux efforts de résistance de la dent suivante apparaissent par l'intermédiaire de l'arête de coupe qui vient s'engager dans le matériau. Ainsi, la variation des efforts exercés sur l'extrémité de travail 14 durant la rotation de l'outil est-elle atténuée, voire annulée, et les forces de coupe alternative disparaissent. Par conséquent, si la profondeur de passe ap est égale à p fois la profondeur nominale PN, il est alors parfaitement possible de choisir une fréquence de rotation de la broche, de manière à ce que la fréquence de passage des dents, égale au produit de la fréquence de rotation de l'outil et du nombre de dents Z, coïncide avec la fréquence de résonance de l'outil, puisque les variations de forces sont nulles et n'excitent donc pas ladite résonance. La fréquence propre F de l'outil est d'ailleurs mesurée à l'aide d'un appareil après avoir porté un choc sur l'outil, ou durant un usinage brouté. La technique de lobes de stabilité stipule justement qu'il faut faire coïncider la fréquence de passage des dents avec la fréquence de résonance divisée par un nombre entier m compris entre 1 et 10. Pour les faibles valeurs de m, l'efficacité est maximale. Il apparaît donc clairement que cette méthode de fraisage permet de bénéficier des bienfaits de la technique des lobes de stabilité sans avoir les inconvénients dus aux résonances.

De plus, lorsque la profondeur de passe ap est égale à une fois la profondeur nominale PN, comme illustré sur la Figure 1, la largeur de fraisage est choisie comme étant celle du diamètre D de l'extrémité de travail 14, comme illustré sur la Figure 2. Aussi, la section de fraisage est égale au produit du diamètre de ladite extrémité de travail et de la profondeur nominale PN.

Dans la mesure où l'on choisit une profondeur de passe ap égale à deux fois la profondeur nominale PN, il convient alors de prévoir une largeur de fraisage égale à la moitié du diamètre D de l'extrémité de travail 14. Aussi, un paramètre important est alors avantageusement, la section de fraisage qui doit être, de préférence, égale à la valeur du produit du diamètre D de l'extrémité de travail 14 et de la profondeur nominale PN pour un outil de longueur standard (L/D = 3).

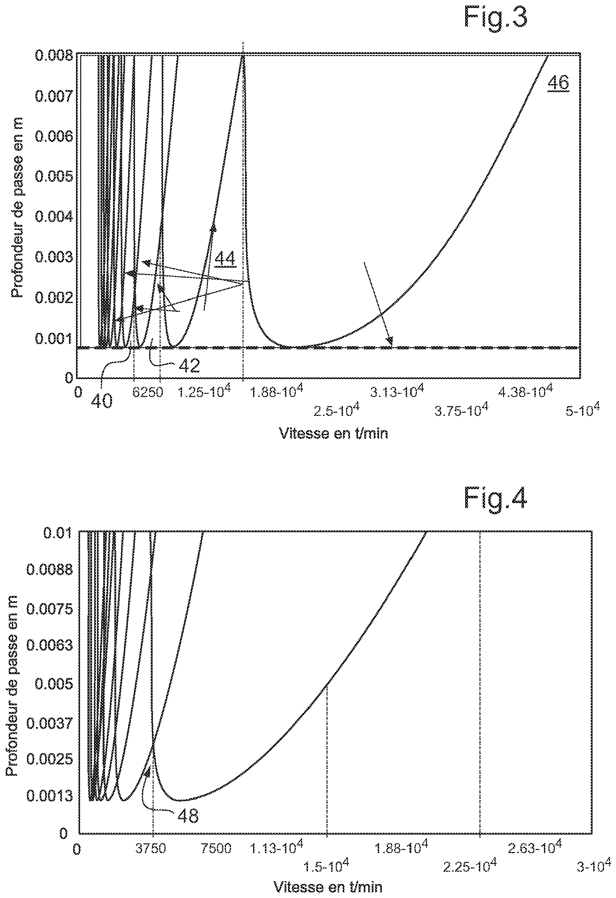

On se reportera ainsi sur la Figure 3 pour illustrer le choix des vitesses de rotation de l'outil de coupe, afin d'éviter non seulement le broutement mais aussi les vibrations.

Tout d'abord, l'outil de coupe considéré, présente uniquement trois dents hélicoïdales décalées angulairement de 120° les unes par rapport aux autres et formant respectivement trois arêtes de coupe qui s'étendent en hélice circulaire. Par ailleurs, l'angle d'hélice $\alpha$, le diamètre D de l'extrémité de travail 14, la profondeur de travail nominale PN et le nombre de dents Z de l'outil, vérifie la loi précisée ci-dessus en référence à l'outil de coupe illustré sur les Figures 1 et 2. L'outil de coupe présente en outre une fréquence propre F1 de vibration égale à 800 Hz. Ainsi, sur la Figure 3 on a représenté en abscisse la vitesse de rotation de l'outil de coupe en nombre de tours par minute, tr/min, et en ordonnée, la profondeur de passe dans le matériau solide à fraiser, ou de travail, de 1 mm jusqu'à 8 mm. Les courbes représentées sur le diagramme délimitent les zones dans lesquelles l'outil de coupe peut être entraîné en rotation à une profondeur de passe correspondante sans vibration. Ainsi, les aires situées au-dessus des courbes engendrent des vibrations de broutement et par conséquent constituent des zones de travail instable, tandis que les aires situées en dessous des courbes constituent des zones de travail stables. On vérifie, que jusqu'à 1 mm de profondeur de travail, quelque soit la vitesse de rotation de l'outil de coupe entre 0 et 50 000 tr/min, le système broche/outil/matériau solide, ne broute pas. En outre, on identifie clairement quatre zones de stabilité croissante, une première zone 40 située sensiblement autour de 5333 tr/min pour une profondeur maximale de 2 mm ; une deuxième zone 42 située sensiblement autour de 8000 tr/min pour une profondeur maximale de 4 mm ; une troisième zone 44 plus importante située sensiblement autour de 16 000 tr/min pour une profondeur maximale de 8 mm et une quatrième zone 46 encore plus vaste au-delà de 43 800 tr/min pour une profondeur de 8 mm. Ainsi il ressort clairement de ce diagramme que l'on a tout intérêt à travailler à grande vitesse. Cependant, avec les broches courantes on atteint rarement 50 000 tr/min. L'intérêt de prendre en compte un tel diagramme réside bien évidemment dans la mise en évidence des zones dans lesquelles on pourra travailler avec la plus grande profondeur de travail ap.

Selon une approche linéaire approximative on peut déterminer les zones de travail acceptables pour le système précité, en tenant compte de la vitesse de rotation de l'outil de coupe, du nombre de dents hélicoïdales et de sa fréquence propre F1 de vibration. En effet, l'outil de coupe présentant trois dents, et sa fréquence propre F1 étant de 800 Hz, une dent aura une amplitude maximale en flexion à l'intérieur du matériau solide 800 x 60/3 = 16 000 fois par minute. En considérant les harmoniques, une dent aura une amplitude maximale en flexion à l'intérieur du matériau solide également, 8000 fois par minute, 5333 fois par minute, 4000 fois par minute etc. Aussi, on observe en corroborant la fréquence d'excursion des dents à une amplitude maximale avec le diagramme représenté sur la Figure 3, que les trois zones de stabilité 40, 42 et 44 coïncident sensiblement et respectivement avec les fréquences par minute, 5333, 8000 et 16 000. De la sorte, on peut choisir par un simple calcul une vitesse de rotation de la broche de 16 000 tr/min qui permet alors des profondeurs de travail maximales proches de 8 mm.

Ainsi, avec l'outil de coupe présentant les caractéristiques ci-dessus énoncées, il est possible de procéder au fraisage avec un fort engagement dans le matériau solide sans générer de vibration et ce, en choisissant les bonnes conditions de rotation correspondant au diagramme de stabilité.

Ainsi qu'on a pu l'observer sur la Figure 3, la quatrième zone 46 du diagramme de stabilité, correspond à des conditions de travail optimales. Cependant, elles nécessitent de pouvoir entraîner l'outil de coupe en rotation à des vitesses correspondant à des fréquences égales à la fréquence propre de vibration des outils et ici, voisines de 50 000 tr/min, ce qui est rarement possible. Aussi il a été imaginé un moyen de compenser les vitesses de rotation modestes par une augmentation du nombre de dents hélicoïdales pour l'outil de coupe. Ainsi, on choisit maintenant un outil de coupe dont l'angle d'hélice $\alpha$, le diamètre D de l'extrémité de travail 14, la profondeur de travail nominale PN et le nombre de dents Z vérifient bien évidemment la loi déjà énoncée ci-dessus. La fréquence propre F2 de vibration est toujours de 800 Hz, en revanche l'outil de coupe présente 12 dents hélicoïdales et le diamètre de l'extrémité de travail est de 20 mm. Par conséquent, si on choisit une profondeur de travail de 5 mm, l'angle d'hélice $\alpha$ vaut 46,3°. En se reportant au diagramme de stabilité représentée sur la Figure 4, on observe, au titre de l'état de la technique utile à la compréhension de l'invention, mais n'en faisant pas partie, une première zone de travail admissible 48 correspondant à vitesse de rotation de 4000 tr/min pour une profondeur de passe d'environ 3 mm. Cette vitesse correspond à la vitesse calculée selon le mode de calcul précité : 800 x 60/12 = 4000. On observe que lorsque la profondeur de travail réel est égale à la profondeur de travail nominal c'est-à-dire 5 mm, la vitesse de rotation admissible minimale est d'environ 16 000 tr/min, soit quatre fois la vitesse calculée précédemment. En revanche, pour une vitesse de rotation de l'outil de coupe de 24 000 tr/min, on peut choisir une profondeur de passe égale à deux fois la profondeur de passe nominale, c'est-à-dire 10 mm sans vibration.

Ainsi, grâce à un grand nombre de dents hélicoïdales, la fréquence de passage de ces dents dans le matériau, est très élevée par rapport à la fréquence de résonance de l'outil de coupe et ne risque pas de l'exciter en vibration. Cependant, il convient de veiller à l'équilibrage de la broche et au faux rond de l'outil de coupe.

Aussi, le porte outil incorpore un dispositif de réglage du faux rond par déformation suivant, par exemple, 3 points situés sensiblement à 120° les uns des autres pour corriger les variations de force générées par la répartition angulaire inégale des dents.

Par ailleurs, on retiendra préférentiellement parmi les outils de coupe pour ce qui présente les caractéristiques énoncées dans le tableau de correspondance ci-dessous et plus particulièrement, ceux dont le rapport du diamètre D sur profondeur nominale PN, obéissent à une série dite « série RENARD standard » : 0.8 ; 1 ; 1.25 ; 1.6 ; 2 ; 2.5 ; 3 .2; 4 ; 5... ce qui génère les angles d'hélice $\alpha$ suivants : 44.5°; 6.3°; 51.5°; 52.6°; 54.4°; 57.5°; 59.2°; 63.2° pour un nombre de dents compris entre 1 et 12.

Tableau de correspondance

| Nombre de dents Z | Diamètre / Profondeur Nominale | Angle d'hélice $\alpha$ |
| --- | --- | --- |
| 1 | 0,63 | 63,195 |
| 2 | 0,63 | 44,701 |
| 2 | 0,80 | 51,488 |
| 2 | 1,00 | 57,518 |
| 2 | 1,25 | 63,010 |
| 3 | 1,60 | 59,170 |
| 3 | 1,00 | 46,321 |
| 3 | 1,25 | 52,622 |
| 3 | 1,60 | 59,170 |
| 3 | 2,00 | 64,477 |
| 4 | 1,25 | 44,472 |
| 4 | 1,60 | 51,488 |
| 5 | 2,00 | 51,488 |
| 6 | 3,00 | 57,518 |
| 8 | 4,00 | 57,518 |
| 9 | 4,00 | 54,390 |
| 12 | 4,00 | 46,321 |

Selon un mode particulièrement avantageux l'outil de coupe présente une extrémité de travail avec des dents hélicoïdales réparties sensiblement régulièrement autour dudit axe de symétrie, mais avec un décalage angulaire sensible à la pointe de l'outil. Ainsi, l'angle d'hélice varie, entre les dents des paires de dents consécutives de façon à ce que chaque paire de dents se recouvrent à la profondeur nominale PN. Si deux dents sont écartées l'une de l'autre d'un angle $\theta$ rad, la tangente de l'angle d'hélice vaudra par conséquent $\theta.D/(2.PN)$, où D est le diamètre de l'extrémité de travail et PN la profondeur nominale. Par exemple pour un décalage de 1°, l'outil présente 3 dents espacées les unes des autres de $2\pi/3$ +/- $2\pi/360$ rad.

On se référera maintenant aux Figures 5 et 6, afin de montrer l'efficacité de la méthode de fraisage conforme à l'invention et des outils associés. Nous sommes alors dans ces deux cas de figure, à la fréquence de résonance principale de l'outil, c'est-à-dire à la fréquence de passage de dents.

Le graphique de la Figure 5 est obtenue au moyen d'un outil, pour lequel le nombre de dents Z, est égal à 3, et dont le diamètre est de 20 mm. Dans le plan horizontal du graphique, les abscisses correspondent à la profondeur de fraisage exprimée en millimètres et les ordonnées à la largeur de fraisage toujours exprimée en millimètres, tandis que l'axe vertical correspond à l'amplitude de vibrations en micromètres de l'extrémité de l'outil de travail. Ainsi, on observe une surface présentant deux dômes, 50, 52, lesquels correspondent respectivement à une profondeur de fraisage de 6 mm pour une largeur de fraisage de 15 mm et une profondeur de fraisage de 19 mm pour une largeur de fraisage de 15 mm également. Bien évidemment, on comprend que lorsque les conditions de fraisage correspondent à une situation où l'on se trouve sur l'un ou l'autre de ces dômes 50, 52, les vibrations dans l'outil sont plus fortes. En revanche, on observe qu'entre les dômes, 50, 52 pour une profondeur de fraisage de 12 mm, même si la largeur de fraisage est de 20 mm, l'amplitude des vibrations est sensiblement 10 fois moins élevée que l'extrémum des dômes 50, 52. C'est bien évidemment dans ces conditions de fraisage qu'il est préférable de travailler.

On se reportera à présent sur la Figure 6, où le graphique est obtenu au moyen d'un outil UGV classique pour lequel le nombre de dents Z est égal à 2 et dont le diamètre est également de 20 mm. On obtient alors une surface 54 régulière. Ainsi, l'amplitude des vibrations ne fait que croître lorsque la profondeur de fraisage et la largeur de passe augmentent. L'extremum de cette courbe est six fois plus important que le sommet des deux dômes 50, 52 précités. Au surplus, pour une profondeur de fraisage de 12 mm et une largeur de fraisage de 20 mm, l'amplitude de vibration n'est plus de 7 $\mu$m mais de 272 $\mu$m.

Ainsi, la prise en compte de la géométrie de l'outil, est nécessaire conformément à l'invention, pour déterminer la profondeur de fraisage possible avec le moins de vibrations possibles. En outre, grâce à la méthode, on prend également en compte la largeur de fraisage.

**Revendications**

1.  Méthode de fraisage à grande vitesse d'un matériau solide du type selon laquelle :

    - on fournit un outil de coupe présentant une extrémité de fixation et une extrémité de travail opposée, ladite extrémité de travail étant terminée par une extrémité libre, ladite extrémité de travail présentant un nombre de dents hélicoïdales déterminé Z ≥ 1, lesdites dents étant réparties autour de l'axe de symétrie dudit outil en formant respectivement Z arêtes de coupe, lesdites arêtes de coupe s'étendant respectivement en hélice circulaire autour dudit axe de symétrie dudit outil selon un pas d'hélice déterminé P, de ladite extrémité libre vers ladite extrémité de fixation;
    - on entraîne en rotation ledit outil à une fréquence de rotation $\omega$, ledit outil présentant une fréquence propre F de vibration en flexion ;
    - on choisit une fréquence de rotation $\omega_f$ sensiblement égale à ladite fréquence propre F dudit outil divisée par n fois le nombre de dents Z dudit outil, n étant un entier naturel;
    - on engage à travers ledit matériau solide une longueur d'extrémité de travail dudit outil de coupe correspondant à une profondeur de fraisage ;

    **caractérisée en ce qu'**on choisit une profondeur de fraisage ap égale à p fois ledit pas d'hélice déterminé P divisé par ledit nombre de dents Z, p étant un entier naturel supérieur ou égal à 1.

2.  Méthode de fraisage selon la revendication 1, **caractérisée en ce qu'**on entraîne ledit outil de coupe à travers ledit matériau solide selon une direction sensiblement perpendiculaire audit axe de symétrie dudit outil de façon que la section de fraisage, soit sensiblement égale ou inférieure au produit du diamètre de ladite extrémité de travail et dudit pas d'hélice déterminé P divisé par ledit nombre de dents Z.

3.  Méthode de fraisage selon la revendication 2, **caractérisée en ce qu'**on entraîne ledit outil de coupe à travers ledit matériau solide selon une direction sensiblement perpendiculaire audit axe de symétrie dudit outil de façon que la largeur de fraisage soit sensiblement égale au diamètre de ladite extrémité de travail.

4.  Méthode de fraisage selon l'une quelconque des revendications 1 à 3, **caractérisée en ce qu'**on fournit un outil de coupe dont les hélices circulaires desdites arêtes de coupe de ladite extrémité de travail présentent un angle $\alpha$ par rapport à l'axe dudit outil selon lequel, tangente $\alpha$ est égal à la circonférence de ladite extrémité de travail divisée par ledit pas d'hélice déterminé P.

5.  Méthode de fraisage selon la revendication 4, **caractérisée en ce qu'**on choisit un angle $\alpha$ compris entre 40° et 65°.

6.  Méthode de fraisage selon l'une quelconque des revendications 1 à 5, **caractérisée en ce qu'**on fournit un outil de coupe dont l'extrémité de travail présente Z dents hélicoïdales réparties sensiblement régulièrement autour dudit axe de symétrie.

7.  Méthode de fraisage selon l'une quelconque des revendications 1 à 6, **caractérisée en ce qu'**on fournit un outil de coupe dont ladite extrémité de travail présente un nombre de dents hélicoïdales Z = 3.

8.  Méthode de fraisage selon l'une quelconque des revendications 1 à 6, **caractérisée en ce qu'**on fournit un outil de coupe dont ladite extrémité de travail présente un nombre de dents hélicoïdales Z ≥ 9.

**Patentansprüche**

1.  Hochgeschwindigkeits-Fräsverfahren eines festen Materials, eines Typs, bei dem Folgendes bewerkstelligt wird:

    - bereitstellen eines Schneidwerkzeugs, das ein Befestigungsende und ein gegenüberliegendes Arbeitsende aufweist, wobei das genannte Arbeitsende mit einem freien Ende endet, wobei das genannte Arbeitsende eine Anzahl an schraubenlinienförmigen Zähnen aufweist, die mit Z ≥1 festgelegt wird, wobei die genannten Zähne um die Symmetrieachse des genannten Werkzeugs unter Bildung von Z Schneidkanten verteilt sind, wobei die genannten Schneidkanten jeweils in Form einer kreisförmigen Helix um die genannte Symmetrieachse des genannten Werkzeugs mit einer mit P festgelegten Spiralsteigung, ausgehend vom genannten freien Ende zum genannten Befestigungsende verlaufen;

- in Drehung versetzen des genannten Werkzeugs bei einer Rotationsfrequenz $\omega$, wobei das Werkzeug eine Eigenfrequenz der Biegeschwingung F aufweist;

- auswählen einer Rotationsfrequenz $\omega_f$, die der genannten Eigenfrequenz F des genannten Werkzeugs geteilt durch n mal der Anzahl an Zähnen Z des genannten Werkzeugs im Wesentlichen gleicht, wobei n eine natürliche Zahl darstellt;

- eingreifen in das genannte feste Material um eine Länge des Arbeitsendes des genannten Schneidwerkzeugs, die einer Frästiefe entspricht;

**dadurch gekennzeichnet, dass** eine Frästiefe ap gewählt wird, die p mal der genannten festgelegten Spiralsteigung P, dividiert durch die genannte Anzahl an Zähnen Z gleicht, wobei p eine natürliche Zahl ist, die größer oder gleich 1 ist.

2. Fräsverfahren nach Anspruch 1, **dadurch gekennzeichnet, dass** das genannte Schneidwerkzeug durch das genannte feste Material in einer Richtung angetrieben wird, die zur Symmetrieachse des genannten Werkzeugs im Wesentlichen senkrecht steht, sodass der Fräsbereich im Wesentlichen kleiner oder gleich dem Produkt aus dem Durchmesser des genannten Arbeitsendes und aus der genannten, durch P festgelegten Spiralsteigung, dividiert durch die genannte Anzahl an Zähnen Z ist.

3. Fräsverfahren nach Anspruch 2, **dadurch gekennzeichnet, dass** das genannte Schneidewerkzeug durch das genannte feste Material in einer Richtung angetrieben wird, die zur Symmetrieachse des genannten Werkzeugs im Wesentlichen senkrecht steht, sodass die Fräsbreite dem Durchmesser des genannten Arbeitsendes im Wesentlichen gleicht.

4. Fräsverfahren nach irgendeinem der Ansprüche von 1 bis 3, **dadurch gekennzeichnet, dass** ein Schneidwerkzeug bereitgestellt wird, dessen kreisförmige Spiralen der genannten Schneidkanten des genannten Arbeitsendes einen Winkel $\alpha$ in Bezug zur Achse des genannten Werkzeugs aufweisen, bei welchem der Tangens $\alpha$ dem Umfang des genannten Arbeitsendes dividiert durch die genannte, durch P festgelegte Spiralsteigung gleicht.

5. Fräsverfahren nach Anspruch 4, **dadurch gekennzeichnet, dass** ein Winkel $\alpha$ zwischen 40° und 65° gewählt wird.

6. Fräsverfahren nach irgendeinem der Ansprüche von 1 bis 5, **dadurch gekennzeichnet, dass** ein Schneidwerkzeug bereitgestellt wird, dessen Arbeitsende Z spiralförmige Zähne aufweist, die im Wesentlichen auf regelmäßige Weise um die genannte Symmetrieachse verteilt sind.

7. Fräsverfahren nach irgendeinem der Ansprüche von 1 bis 6, **dadurch gekennzeichnet, dass** ein Schneidwerkzeug bereitgestellt wird, dessen genanntes Arbeitsende eine Anzahl Z = 3 an spiralförmigen Zähnen aufweist.

8. Fräsverfahren nach irgendeinem der Ansprüche von 1 bis 6, **dadurch gekennzeichnet, dass** ein Schneidwerkzeug bereitgestellt wird, dessen genanntes Arbeitsende eine Anzahl $Z \geq 9$ an spiralförmigen Zähnen aufweist.

**Claims**

1. A method for high speed milling of a solid material of the type according to which :

a cutting tool is provided having a securing end and an opposite working end, said working end being terminated by a free end, said working end having a given number of helical teeth Z > 1, said teeth being distributed around the symmetry axis of said tool by respectively forming Z cutting edges, said cutting edges extending respectively in a circular screw around said symmetry axis of said tool according to a given screw pitch P, of said free end towards said securing end ;

said tool is rotated at a rotational frequency W, said tool having a natural frequency F in flexion vibration ;

a rotational frequency WF is selected to be substantially equal to said natural frequency F of said tool divided by n times the teeth number Z of said tool, n being a natural number;

a length of working end of said cutting tool corresponding to a milling depth is engaged through said solid material;

**characterized in that** a milling depth ap is selected to be equal to p times said given screw pitch P divided by said teeth number Z, p being a natural number equal to or higher than 1.

2.  The milling method according to claim 1, **characterized in that** said cutting tool is driven through said solid material according to a direction substantially perpendicular to said symmetry axis of said tool so that the milling section is substantially equal or lower than the product of the diameter of said working end and said given screw pitch P divided by said teeth number Z.

3.  The milling method according to claim 2, **characterized in that** said cutting tool is driven through said solid material according to a direction substantially perpendicular to said symmetry axis of said tool so that the milling width is substantially equal to the diameter of said working end.

4.  The milling method according to any of claims 1 to 3, **characterized in that** a cutting tool is provided whose circular screws of said cutting edges of said working end have an angle "a" relatively to the axis of said tool according to which, tangent a is equal to the circumference of said working end divided by said given screw pitch P.

5.  The milling method according to claim 4, **characterized in that** an angle is selected to be comprised between 40° and 65°.

6.  The milling method according to any of claims 1 to 5, **characterized in that** a cutting tool is provided whose working end has Z helical teeth substantially regularly distributed around said symmetry axis.

7.  The milling method according to any of claims 1 to 6, **characterized in that** a cutting tool is provided whose said working end has a number of helical teeth Z=3.

8.  The milling method according to any of claims 1 to 6, **characterized in that** a cutting tool is provided whose said working end has a number of helical teeth Z > 9.

Fig.1b

Fig. 1a

Fig.2

## Fig.3

## Fig.4

Fig.5

Fig.6

Fig.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ZHONGQUN L et al.** Solution and Analysis of Chatter Stability for End Milling in the Time-domain. *CHINESE JOURNAL OF AERONAUTICS,* 01 Avril 2008, vol. 21 (2), ISSN 1000-9361, 169-178